(19) **Europäisches Patentamt European Patent Office Office européen des brevets**

(11) **EP 4 292 812 A1**

(12) # EUROPEAN PATENT APPLICATION
published in accordance with Art. 153(4) EPC

(43) Date of publication:
**20.12.2023 Bulletin 2023/51**

(21) Application number: **22780583.5**

(22) Date of filing: **25.03.2022**

(51) International Patent Classification (IPC):
**B32B 27/12** (2006.01)     **B32B 7/027** (2019.01)
**B32B 27/18** (2006.01)     **H01M 10/625** (2014.01)
**H01M 10/658** (2014.01)     **H01M 50/204** (2021.01)
**H01M 50/229** (2021.01)     **H01M 50/231** (2021.01)
**H01M 50/249** (2021.01)

(52) Cooperative Patent Classification (CPC):
**B32B 7/027; B32B 27/12; B32B 27/18;**
H01M 10/625; H01M 10/658; H01M 50/204;
H01M 50/229; H01M 50/231; H01M 50/249;
Y02E 60/10

(86) International application number:
**PCT/JP2022/014460**

(87) International publication number:
**WO 2022/210370 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021  JP 2021055883**

(71) Applicant: SEKISUI CHEMICAL CO., LTD.
**530-0047 (JP)**

(72) Inventors:
• **MOCHIZUKI, Hiroaki**
  **Shunan-shi, Yamaguchi 746-0006 (JP)**
• **MATSUMURA, Kenichi**
  **Shunan-shi, Yamaguchi 746-0006 (JP)**
• **SUGAYA, Takehisa**
  **Mishima-gun, Osaka 618-0021 (JP)**

(74) Representative: **Cabinet Beau de Loménie**
  **158, rue de l'Université**
  **75340 Paris Cedex 07 (FR)**

(54) **LAMINATE**

(57)    The present invention provides a laminate that can maintain sufficient strength even after combustion and that can reduce a strength decrease due to flame and heat caused by ignition inside a battery especially when the laminate is used as a cover for an in-vehicle battery. Provided is a laminate including: a base layer containing a resin and a fiber; and a sintering layer containing a thermoplastic resin and a sintering promoter.

EP 4 292 812 A1

**Description**

TECHNICAL FIELD

The present invention relates to a laminate that can maintain sufficient strength even after combustion and that can reduce a strength decrease due to flame and heat caused by ignition inside a battery especially when the laminate is used as a cover for an in-vehicle battery.

BACKGROUND ART

Various batteries, such as lithium-ion batteries, are at risk of thermal runaway and ignition due to events such as internal short circuits. In particular, in-vehicle batteries can undergo thermal runaway and ignite due to the impact of a vehicular accident, for example, and may cause a vehicle fire. Covers for batteries thus need to impede the transmission of heat from the battery to the surroundings when the battery has become abnormally hot due to thermal runaway, or impede the transmission of flame generated by battery ignition to the outside.

As an example of such a cover for an in-vehicle battery, Patent Literature 1 discloses a battery casing made of a metal material such as iron or aluminum.

Patent Literature 2 discloses a vehicle battery casing including a metal material such as an aluminum alloy or stainless steel as a substrate.

Patent Literature 3 discloses an in-vehicle battery containing body constituted by a laminate that includes a layer containing a thermoplastic resin such as polyamide and a reinforcing fiber such as glass fiber.

Patent Literature 4 discloses a flame-retardant vinyl chloride resin laminate to be used as an interior or exterior material of transportation machinery, an interior or exterior material of a building, a housing material, or the like. It discloses that the laminate includes a first layer that is a surface layer and a second layer that is a base layer, the first layer including a PVC matrix containing a material such as vinyl chloride homopolymer or post-chlorinated polyvinyl chloride and a flame retardant containing titanium oxide, and the second layer including a PVC matrix made of a high-chlorine-content polyvinyl chloride resin and a flame retardant containing titanium oxide.

CITATION LIST

- Patent Literature

Patent Literature 1: JP 2001-294048 A
Patent Literature 2: JP 2013-97883 A
Patent Literature 3: WO 2019/044801
Patent Literature 4: JP 3990531 B

SUMMARY OF INVENTION

- Technical problem

However, the covers with metal material substrates disclosed in Patent Literatures 1 and 2 show a significant strength decrease due to heat and cannot sufficiently withstand ignition caused by thermal runaway of a battery. The in-vehicle battery containing body disclosed in Patent Literature 3 and the laminate disclosed in Patent Literature 4 also cannot reduce a strength decrease due to heat and have insufficient resistance to ignition due to thermal runaway of a battery.

The present invention aims to provide a laminate that can maintain sufficient strength even after combustion and that can reduce a strength decrease due to flame and heat caused by ignition inside a battery especially when the laminate is used as a cover for an in-vehicle battery.

- Solution to problem

The present invention relates a laminate including: a base layer containing a resin and a fiber; and a sintering layer containing a thermoplastic resin and a sintering promoter.

The present invention is described in detail below.

After extensive studies, the present inventors have found out that forming a base layer containing a resin and a fiber and a sintering layer containing a thermoplastic resin and a sintering promoter can sufficiently reduce a strength decrease even after the laminate combusts due to flame and heat generated inside a battery, especially when the laminate is used as a cover for an in-vehicle battery. The inventors thus completed the present invention.

The laminate of the present invention includes a base layer containing a resin and a fiber and a sintering layer containing a thermoplastic resin and a sintering promoter.

The structure allows the laminate to maintain sufficient strength even after it combusts due to thermal runaway of a battery because the sintering layer sinters to form a firm layer when exposed to flame caused by ignition.

(Base layer)

The laminate of the present invention includes a base layer containing a resin and a fiber.

The presence of the base layer enables the laminate to exhibit sufficient mechanical strength and reduce damage and the like due to a collision accident when the laminate is used as a battery cover.

The base layer contains a resin.

Examples of the resin include: synthetic resins such as thermoplastic resins and thermosetting resins; and elastomers.

Examples of the thermoplastic resins include halogen-containing resins such as chlorinated polyvinyl chloride resins (CPVC) and polyvinyl chloride resins (PVC), polyolefins such as polyethylene and polypropylene, polystyrene (PS), acrylonitrile-styrene copolymers (AS resins), acrylonitrile-butadiene-styrene copolymers (ABS resins), acrylic resins such as polymethyl methacrylate, polyamides, polycarbonates, polysulfone (PSU resin), polyphenylsulfone (PPSU), polyethersulfone (PES resin), polyetherimide (PEI resin), polyphenylene sulfide (PPS resin), polyester resins such as polyethylene terephthalate and polybutylene terephthalate, polyacetals, polyimides, polyphenylene ether, polyether ether ketone, and liquid crystal polymers. Preferred among these are halogen-containing resins, polycarbonates, and polyamides. More preferred are chlorinated polyvinyl chloride resins and polyvinyl chloride resins. Still more preferred are chlorinated polyvinyl chloride resins.

Examples of the thermosetting resins include polyurethanes, phenolic resins, epoxy resins, urea resins, melamine resins, silicone resins, unsaturated polyester resins, alkyd resins, and thermosetting polyimides.

Examples of the elastomers include thermoplastic elastomers such as olefin elastomers, styrene elastomers, ester elastomers, amide elastomers, and vinyl chloride elastomers.

The above resins may be used alone or in combination of two or more thereof.

In particular, thermoplastic resins are preferred, and chlorinated polyvinyl chloride resins are more preferred.

The resin may be crosslinked or modified as long as the effects of the present invention are not impaired.

The method for crosslinking is not limited. Examples thereof include crosslinking methods typically used for the above resin components, such as crosslinking methods involving the use of various crosslinking agents or peroxides and crosslinking methods involving electron ray irradiation.

The resin preferably has a loss on heating at 400°C of 30% by mass or more and 80% by mass or less.

When the loss on heating is within the range, a strength decrease can be sufficiently reduced while the loss of the resin due to heat is reduced.

The loss on heating is more preferably 50% by mass or more and 75% by mass or less.

The loss on heating can be measured using a thermogravimetry (TG) device, for example.

The time required for the loss on heating at 400°C to reach 50% by mass is preferably 10 seconds or longer, more preferably 30 seconds or longer and preferably 20 minutes or shorter, more preferably 15 minutes or shorter.

The time required for the loss on heating to reach 50% by mass can be determined using a thermogravimetry (TG) device, for example.

The resin preferably has an oxygen index of 20 or greater.

When the oxygen index is 20 or greater, the resin can exhibit excellent flame-shielding performance.

The oxygen index is more preferably 22 or greater and is preferably 90 or less, more preferably 70 or less.

The oxygen index is the minimum concentration (% by volume) of oxygen necessary to sustain combustion of a material. It can be determined by a method in conformity with JIS K7201-2:2007 or ASTM D2863, for example.

The resin preferably has a weight average molecular weight (Mw) of 1,000 to 1,000,000, more preferably 50,000 to 200,000.

Thermosetting resins are preferably crosslinked to such an extent that they do not flow when heated, but the extent of crosslinking is not limited to the extent.

The resin preferably has a number average molecular weight (Mn) of 35,000 or greater and 90,000 or less.

The weight average molecular weight (Mw) and the number average molecular weight (Mn) are polystyrene-equivalent average molecular weights and can be obtained by GPC using a column LF-804 (produced by Showa Denko K.K.), for example. For polyamides, polymethyl methacrylate (PMMA)-equivalent average molecular weights are preferred.

The resin preferably has a glass transition temperature of 0°C or higher, more preferably 20°C or higher, still more preferably 40°C or higher and preferably 300°C or lower, more preferably 250°C or lower, still more preferably 200°C or lower.

The glass transition temperature can be measured in conformity with JIS K 7121, for example.

When the resin contains a chlorinated polyvinyl chloride resin, the chlorinated polyvinyl chloride resin preferably has a chlorine content of 57% by mass or more, more preferably 60% by mass or more and preferably 72% by mass or less, more preferably 71% by mass or less.

The chlorine content can be measured by a method in conformity with JIS K 7229.

The chlorinated polyvinyl chloride resin preferably has an average degree of polymerization of 400 to 3,000, more preferably 500 to 2,000.

When the average degree of polymerization is within the range, thermally decomposed products of the resin are less likely to disperse in combustion, so that a strength decrease can be reduced.

The average degree of polymerization can be measured by a method in conformity with JIS K 6720-2:1999, for example.

The chlorinated polyvinyl chloride resin preferably includes structural units (b) and (c) represented by the following formulas (b) and (c).
[Chem. 1]

$$-CH_2-CCl_2- \qquad (b)$$

$$-CHCl-CHCl- \qquad (c)$$

In the chlorinated polyvinyl chloride resin, the proportion of the structural unit (b) is preferably 5.1 mol% or more, more preferably 15.2 mol% or more and is preferably 39.8 mol% or less, more preferably 30.0 mol% or less, relative to all the structural units.

In the chlorinated polyvinyl chloride resin, the proportion of the structural unit (c) is preferably 5.2 mol% or more, more preferably 25.1 mol% or more and is preferably 54.9 mol% or less, more preferably 40.0 mol% or less, relative to all the structural units.

The molar ratios of the structural units (b) and (c) in the chlorinated polyvinyl chloride resin reflect the site to which chlorine is introduced at the time of chlorination of a polyvinyl chloride resin (PVC). The proportions of the structural units (b) and (c) in PVC before chlorination are 0 mol%, but the proportions of the structural units (b) and (c) increase as the chlorination proceeds.

The molar ratios of the structural units (b) and (c) in the chlorinated polyvinyl chloride resin can be measured by molecular structure analysis using NMR. The NMR analysis can be performed in accordance with the method described in R. A. Komoroski, R. G. Parker, J. P. Shocker, Macromolecules, 1985, 18, 1257-1265.

The chlorinated polyvinyl chloride resin is a resin obtained by chlorinating a polyvinyl chloride resin (PVC).

Examples of the polyvinyl chloride resin include a vinyl chloride homopolymer, a copolymer of a vinyl chloride monomer and a monomer with unsaturated bond(s) that is copolymerizable with the vinyl chloride monomer, and a graft copolymer obtained by grafting a vinyl chloride monomer to a polymer. These polymers may be used alone or in combination of two or more thereof.

Examples of the monomer with unsaturated bond(s) that is copolymerizable with the vinyl chloride monomer include α-olefins, vinyl esters, vinyl ethers, (meth)acrylates, aromatic vinyls, vinyl halides, and N-substituted maleimides. These monomers may be used alone or in combinations of two or more.

Examples of the α-olefins include ethylene, propylene, and butylene.

Examples of the vinyl esters include vinyl acetate and vinyl propionate.

Examples of the vinyl ethers include butyl vinyl ether and cetyl vinyl ether.

Examples of the (meth)acrylates include methyl (meth)acrylate, ethyl (meth)acrylate, butyl acrylate, and phenyl methacrylate.

Examples of the aromatic vinyls include styrene and α-methyl styrene.

Examples of the vinyl halides include vinylidene chloride and vinylidene fluoride.

Examples of the N-substituted maleimides include N-phenyl maleimide and N-cyclohexyl maleimide.

The polymer to which vinyl chloride is graft copolymerized is not limited as long as vinyl chloride can be graft polymerized. Examples of such a polymer include ethylene copolymers, acrylonitrile-butadiene copolymers, polyurethane, chlorinated polyethylene, and chlorinated polypropylene. These may be used alone or in combination of two or more thereof.

Examples of the ethylene copolymers include ethylene-vinyl acetate copolymers, ethylene-vinyl acetate-carbon monoxide copolymers, ethylene-ethyl acrylate copolymers, ethylene-butyl acrylate-carbon monoxide copolymers, ethylene-methyl methacrylate copolymers, and ethylenepropylene copolymers.

The average degree of polymerization of the PVC is not limited, and a typical average degree of polymerization of 400 to 3,000 is preferred. The average degree of polymerization is more preferably 600 to 2,000. The average degree of polymerization can be measured by a method specified in JIS K 6720-2:1999.

The method for polymerizing the PVC is not limited. A conventionally known method can be used such as aqueous suspension polymerization, bulk polymerization, solution polymerization, or emulsion polymerization.

The amount of the resin in the base layer is preferably 10% by mass or more, more preferably 20% by mass or more, still more preferably 25% by mass or more and is preferably 80% by mass or less, more preferably 75% by mass or less, still more preferably 70% by mass or less.

The amount of the resin in the base layer is preferably 20% by volume or more, more preferably 25% by volume or more, still more preferably 30% by volume or more and is preferably 80% by volume or less, more preferably 75% by volume or less, still more preferably 70% by volume or less.

The amount of the resin constituting the base layer in the laminate of the present invention is preferably 25% by mass or more, more preferably 30% by mass or more, still more preferably 35% by mass or more and is preferably 75% by mass or less, more preferably 70% by mass or less, still more preferably 65% by mass or less.

The amount of the resin constituting the base layer in the laminate of the present invention is preferably 150 by volume or more, more preferably 20% by volume or more, still more preferably 25% by volume or more and is preferably 75% by volume or less, more preferably 70% by volume or less, still more preferably 65% by volume or less.

The base layer contains a fiber.

Examples of the fiber include reinforcing fibers such as carbon fibers, metal fibers, organic fibers, and inorganic fibers.

Examples of the carbon fibers include PAN carbon fibers, pitch carbon fibers, cellulose carbon fibers, and vapor-grown carbon fibers.

Examples of the metal fibers include fibers made of metals such as iron, gold, silver, copper, aluminum, brass, and stainless steel.

Examples of the organic fibers include fibers made of organic materials such as aramids, polybenzoxazole (PBO), polyphenylene sulfide, polyesters, polyamides, and polyethylene.

Examples of the inorganic fibers include fibers made of inorganic materials such as glass, basalt, silicon carbide, and silicon nitride. Examples of the glass fibers include E glass, C glass, S glass, and T glass.

In particular, from the standpoint of the strength after combustion, the fiber is preferably at least one selected from the group consisting of a carbon fiber and an inorganic fiber, more preferably at least one selected from the group consisting of a carbon fiber and a glass fiber.

The fiber preferably has an average fiber size of 2 um or greater, more preferably 3 um or greater and preferably 30 um or less, more preferably 26 um or less.

The fiber may be a discontinuous fiber that is intermittently divided, or may be a continuous fiber that is not divided.

When the fiber is discontinuous fiber, the fiber preferably has an average fiber length of 2 mm or greater, more preferably 4 mm or greater and preferably 100 mm or less, more preferably 80 mm or less.

The fiber preferably has a specific gravity of 1.5 or greater, more preferably 1.7 or greater, still more preferably 2.0 or greater and preferably 3.0 or less, more preferably 2.7 or less, still more preferably 2.6 or less.

The specific gravity can be measured with an electronic densimeter, for example.

The fiber may be in any form. Examples thereof include a fiber form and a form of a sheet of woven fabric, knitted fabric, or non-woven fabric.

When the fiber is in a sheet form, the fiber preferably has a weight per unit area of 100 $g/m^2$ or more, more preferably 350 $g/m^2$ or more and preferably 1,000 $g/m^2$ or less, more preferably 650 $g/m^2$ or less.

When the fiber is in a sheet form, preferably 3 or more, more preferably 5 or more but preferably 15 or fewer, more preferably 10 or fewer layers of the fiber are laminated to ensure the strength.

The amount of the fiber in the base layer is preferably 10% by mass or more, more preferably 20% by mass or more, still more preferably 25% by mass or more and is preferably 80% by mass or less, more preferably 75% by mass or less, still more preferably 70% by mass or less.

When the amount of the fiber is within the range, the laminate can have sufficiently high mechanical strength.

The amount of the fiber in the base layer is preferably 20% by volume or more, more preferably 25% by volume or more, still more preferably 30% by volume or more and is preferably 80% by volume or less, more preferably 75% by volume or less, still more preferably 70% by volume or less.

When the amount of the fiber is within the range, the laminate can have sufficiently high mechanical strength.

The amount of the fiber in the base layer is preferably 40 parts by mass or more, more preferably 50 parts by mass or more, still more preferably 70 parts by mass or more and is preferably 200 parts by mass or less, more preferably 190 parts by mass or less, still more preferably 170 parts by mass or less, relative to 100 parts by mass of the resin.

The amount of the fiber in the laminate of the present invention is preferably 20% by mass or more, more preferably 25% by mass or more and is preferably 70% by mass or less, more preferably 65% by mass or less.

The amount of the fiber in the laminate of the present invention is preferably 15% by volume or more, more preferably 20% by volume or more, still more preferably 25% by volume or more and is preferably 75% by volume or less, more preferably 70% by volume or less, still more preferably 65% by volume or less.

The base layer may contain additives such as thermal stabilizers, lubricants, inorganic fillers, pigments, flame retardants, antioxidants, processing aids, ultraviolet absorbers, and light stabilizers in addition to the resin and the fiber, if necessary.

The thickness of the base layer is preferably 0.2 mm or greater, more preferably 0.4 mm or greater and is preferably 10 mm or less, more preferably 7 mm or less.

When the laminate of the present invention includes two or more base layers, the "thickness of the base layer" means the total thickness of the base layers.

The proportion, by mass, of the base layer in the laminate of the present invention is preferably 1/10 or greater, more preferably 2/10 or greater and is preferably 9/10 or less, more preferably 8/10 or less.

The proportion of the thickness of the base layer in the thickness of the laminate of the present invention is preferably 1/10 or greater, more preferably 2/10 or greater and is preferably 9/10 or less, more preferably 8/10 or less.

The base layer preferably has a bending modulus of 10 GPa or greater, more preferably 15 GPa or greater, still more preferably 17 GPa or greater and preferably 100 GPa or less, more preferably 50 GPa or less, still more preferably 30 GPa or less.

When the bending modulus is within the range, the laminate used as a battery cover can exhibit sufficient mechanical strength to reduce damage and the like due to a collision accident.

The bending modulus can be measured by the method described later in Examples.

(Sintering layer)

The laminate of the present invention includes a sintering layer containing a thermoplastic resin and a sintering promoter.

The presence of the sintering layer can reduce a strength decrease even after combustion because the sintering layer sinters to form a firmer layer due to flame and heat generated inside a battery when the laminate is used as a cover for an in-vehicle battery.

The sintering layer contains a thermoplastic resin.

Examples of the thermoplastic resin include the same thermoplastic resin as that constituting the base layer, for example.

In particular, a polyvinyl chloride resin and a chlorinated polyvinyl chloride resin are preferred.

The thermoplastic resin constituting the sintering layer may be the same as or different from the resin constituting the base layer.

The thermoplastic resin constituting the sintering layer preferably has a loss on heating at 400°C of not higher than the loss on heating at 400°C of the resin constituting the base layer.

The time required for the loss on heating at 400°C of the thermoplastic resin constituting the sintering layer to reach 50% by mass is preferably 3 seconds or longer, more preferably 10 seconds or longer and is preferably 15 minutes or shorter, more preferably 10 minutes or shorter.

The ratio of the time required for the loss on heating at 400°C of the thermoplastic resin constituting the sintering layer to reach 50% by mass to the time required for the loss on heating at 400°C of the resin constituting the base layer to reach 50% by mass (sintering layer/base layer) is preferably 1 or greater, more preferably 1.3 or greater and is preferably 10 or less, more preferably 9 or less.

The ratio of the loss on heating at 400°C of the thermoplastic resin constituting the sintering layer to the loss on heating at 400°C of the resin constituting the base layer (sintering layer/base layer) is preferably 0.8 or greater, more preferably 0.9 or greater and is preferably 1.2 or less, more preferably 1.1 or less.

The ratio of the oxygen index of the thermoplastic resin constituting the sintering layer to the oxygen index of the resin constituting the base layer (sintering layer/base layer) is preferably 0.5 or greater, more preferably 0.6 or greater and is preferably 1.5 or less, more preferably 1.4 or less.

The amount of the thermoplastic resin in the sintering layer is preferably 70% by mass or greater, more preferably 75% by mass or greater, still more preferably 80% by mass or greater and is preferably 99% by mass or less, more preferably 95% by mass or less, still more preferably 92% by mass or less.

The ratio, by mass, of the amount of the resin in the base layer to the amount of the thermoplastic resin in the sintering layer (amount of resin in base layer/amount of thermoplastic resin in sintering layer) is preferably 0.5 or greater, more preferably 1.0 or greater, still more preferably 1.5 or greater and is preferably 3 or less, more preferably 2 or less.

The amount of the thermoplastic resin in the sintering layer is preferably 80% by volume or more, more preferably 85% by volume or more and is preferably 99.9% by volume or less, more preferably 99.8% by volume or less, still more preferably 99.7% by volume or less.

The amount of the thermoplastic resin constituting the sintering layer in the laminate of the present invention is preferably 2% by mass or more, more preferably 5% by mass or more, still more preferably 7% by mass or more and is preferably 35% by mass or less, more preferably 30% by mass or less, still more preferably 25% by mass or less.

In the laminate of the present invention, the ratio of the amount of the resin constituting the base layer to the amount of the thermoplastic resin constituting the sintering layer (amount of resin constituting base layer/amount of thermoplastic resin constituting sintering layer) is preferably 0.1 or greater, more preferably 0.5 or greater, still more preferably 1.5 or greater and is preferably 5 or less, more preferably 4 or less.

The amount of the thermoplastic resin constituting the sintering layer in the laminate of the present invention is preferably 5% by volume or more, more preferably 10% by volume or more, still more preferably 150 by volume or more and is preferably 90% by volume or less, more preferably 80% by volume or less, still more preferably 70% by volume or less.

The total amount of the resin constituting the base layer and the thermoplastic resin constituting the sintering layer in the laminate of the present invention is preferably 15% by mass or more, more preferably 30% by mass or more and is preferably 90% by mass or less, more preferably 80% by mass or less.

The sintering layer contains a sintering promoter.

Containing the sintering promoter, the sintering layer sinters to form a firm layer when exposed to flame caused by ignition due to thermal runaway of a battery, thus reducing a strength decrease after combustion.

Examples of the sintering promoter include metals, metal oxides, metal nitrides, metal sulfides, metal halides, metal alkyl compounds, and metal alkoxy compounds. The sintering promoter is preferably a Lewis acid catalyst from the standpoint of the strength after combustion. To promote the sintering of the resin, the sintering promoter is preferably a compound containing an atom having an electronegativity of 2.5 or greater.

Examples of the metals include boron, aluminum, scandium, titanium, vanadium, chromium, manganese, iron, cobalt, nickel, copper, zinc, zirconium, molybdenum, ruthenium, rhodium, palladium, silver, iridium, platinum, and gold.

Examples of the metal oxides include oxides of the metals above, such as titanium oxide, aluminum oxide, iron oxide, and zinc oxide.

Examples of the metal nitrides include nitrides of the metals above, such as titanium nitride and molybdenum nitride.

Examples of the metal sulfides include sulfides of the metals above, such as titanium sulfide and molybdenum sulfide.

Examples of the metal halides include chlorides of the metals above, such as zinc chloride, titanium chloride, zirconium chloride, copper chloride, silver chloride, gold chloride, and aluminum chloride, fluorides of the metals above, such as boron trifluoride, and bromides of the metals above, such as zinc bromide, titanium bromide, zirconium bromide, copper bromide, silver bromide, gold bromide, and aluminum bromide.

Examples of the metal alkyl compounds include alkyl compounds of the metals above, such as triethylborane and diethylzinc.

Examples of the metal alkoxy compounds include alkoxy compounds of the metals above, such as tetrabutoxytitanium, tetrapropoxytitanium, and tetrabutoxyzirconium.

Preferred among these are metal halides and metal oxides. More preferred are zinc chloride, zinc bromide, and zinc oxide.

Examples of Lewis acid catalysts among the examples shown above include zinc chloride, zinc bromide, zinc oxide, titanium oxide, and iron oxide.

The sintering promoter may have any shape. It may have a particle shape or an irregular shape such as a shape of a pulverized product.

The sintering promoter preferably has an average particle size of 0.1 um or greater, more preferably 0.2 um or greater and preferably 100 um or less, more preferably 50 um or less.

The average particle size can be determined by measuring the particle sizes of randomly extracted 20 samples in a SEM image and calculating the average of the particle sizes.

The amount of the sintering promoter in the sintering layer is preferably 0.1% by mass or more, more preferably 0.2% by mass or more, still more preferably 0.3% by mass or more and is preferably 30% by mass or less, more preferably 15% by mass or less, still more preferably 10% by mass or less.

The amount of the sintering promoter in the sintering layer is preferably 0.1% by volume or more, more preferably 0.2% by volume or more, still more preferably 0.3% by volume or more and is preferably 20% by volume or less, more preferably 15% by volume or less, still more preferably 10% by volume or less.

The amount of the sintering promoter in the sintering layer is preferably 0.1 parts by mass or more, more preferably 0.2 parts by mass or more, still more preferably 0.3 parts by mass or more and is preferably 10 parts by mass or less, more preferably 8 parts by mass or less, still more preferably 5 parts by mass or less, relative to 100 parts by mass of the thermoplastic resin.

The amount of the sintering promoter in the laminate of the present invention is preferably 0.01% by mass or more, more preferably 0.02% by mass or more and is preferably 0.50% by mass or less, more preferably 0.40% by mass or less.

The amount of the sintering promoter in the laminate of the present invention is preferably 0.1 parts by mass or more, more preferably 0.15 parts by mass or more and is preferably 10 parts by mass or less, more preferably 8 parts by mass or less, relative to 100 parts by mass of the total amount of the resin constituting the base layer and the thermoplastic resin constituting the sintering layer.

The amount of the sintering promoter in the laminate of the present invention is preferably 0.1% by volume or more, more preferably 0.5% by volume or more, still more preferably 1.0% by volume or more and is preferably 20% by volume or less, more preferably 15% by volume or less, still more preferably 10% by volume or less.

The sintering layer may further contain additives such as thermal stabilizers, lubricants, and foaming agents.

The foaming agents are not limited and may be chemical foaming agents or physical foaming agents.

Examples of the chemical foaming agents include thermally decomposable inorganic foaming agents, thermally decomposable organic foaming agents, inorganic reactive foaming agents based on sodium bicarbonate and acid, and organic reactive foaming agents based on isocyanate and water.

Examples of the thermally decomposable inorganic foaming agents include thermally expandable graphite, acid ammonium, sodium carbonate, ammonium hydrogen carbonate, sodium hydrogen carbonate, ammonium nitrite, sodium borohydride, and monosodium citrate anhydrous.

Examples of the thermally decomposable organic foaming agents include: azo compounds such as azodicarbonamide, azodicarboxylic acid metal salts (e.g., barium azodicarboxylate), and azobisisobutyronitrile; nitroso compounds such as N,N'-dinitrosopentamethylenetetramine; hydrazine derivatives such as hydrazodicarbonamide, 4,4'-oxybis (benzenesulfonylhydrazide), and toluenesulfonylhydrazide; and semicarbazide compounds such as toluenesulfonylsemicarbazide.

Examples of physical foaming agents include: vermiculite; and thermally expandable particles having hydrocarbon encapsulated therein.

Preferably, the sintering layer before being heated has a thickness of 0.2 mm or greater, more preferably 0.3 mm or greater and preferably 10 mm or less, more preferably 7 mm or less.

The proportion, by mass, of the sintering layer in the laminate of the present invention is preferably 1/10 or greater, more preferably 2/10 or greater and is preferably 9/10 or less, more preferably 8/10 or less.

The proportion of the thickness of the sintering layer in the thickness of the laminate of the present invention is preferably 1/10 or greater, more preferably 2/10 or greater and is preferably 9/10 or less, more preferably 8/10 or less.

The proportion of the thickness of the sintering layer to the thickness of the base layer (thickness of sintering layer/thickness of base layer) is preferably 1/10 or greater, more preferably 2/10 or greater and is preferably 9/10 or less, more preferably 8/10 or less.

The laminate of the present invention may further include a base layer on a surface of the sintering layer opposite to the surface facing the above-described base layer.

In other words, the laminate may have a laminated structure of base layer (A)/sintering layer (B)/base layer (C), where the base layer (A) is the base layer having the sintering layer on at least one surface thereof, and the base layer (C) is the base layer formed on a surface of the sintering layer opposite to the surface facing the base layer (A).

The structure of the base layers (A) and (C) may be the same as that of the above-described base layer.

When the laminate of the present invention includes the base layer (A) and the base layer (C), the ratio of the thickness of the base layer (A) to the thickness of the base layer (C) (thickness of base layer (A)/thickness of base layer (C)) is preferably 10/1 or greater, more preferably 10/2 or greater and is preferably 10/10 or less, more preferably 10/9 or less.

When the laminate of the present invention includes the base layer (A) and the base layer (C), the ratio of the mass of the base layer (A) to the mass of the base layer (C) (mass of base layer (A)/mass of base layer (C)) is preferably 10/1 or greater, more preferably 10/2 or greater and is preferably 10/10 or less, more preferably 10/9 or less.

The laminate of the present invention may have any shape. Examples thereof include a film shape, a plate shape, a sheet shape, a cylindrical shape, a ring shape, a frame shape, and a box shape.

The laminate of the present invention may include a layer containing another component such as a heat-insulating material (e.g., glass wool) or an electrical insulating material (e.g., mica sheet), in addition to the base layer and the sintering layer.

Preferably, the laminate of the present invention before being heated has a thermal conductivity of 0.05 W/mK or greater, more preferably 0.1 W/mK or greater and preferably 0.5 W/mK or less, more preferably 0.4 W/mK or less.

The thermal conductivity can be measured in conformity with JIS R 2616, for example.

Preferably, the laminate of the present invention after being heated at 800°C for one minute has a thermal conductivity of 0.01 W/mK or greater, more preferably 0.05 W/mK or greater and preferably 0.15 W/mK or less, more preferably 0.12 W/mK or less.

When the thermal conductivity is within the range, the laminate can sufficiently reduce the transmission of flame and heat generated by ignition inside a battery to the outside when used as a cover for an in-vehicle battery.

The laminate of the present invention preferably has a rate of change in thermal conductivity of 0.5 or greater and 50 or less after being heated at 800°C for one minute, the rate of change in thermal conductivity being represented by the following formula (1).

$$\text{(Rate of change in thermal conductivity)} = [\text{(Thermal conductivity before heating)} - \text{(Thermal conductivity after heating)}]/\text{(Thermal conductivity after heating)} \quad (1)$$

The rate of change within the range is advantageous in that the heat-shielding performance can be increased without greatly increasing the thickness of the laminate before heating.

The rate of change is more preferably 1 or greater and is more preferably 30 or less, still more preferably 10 or less.

The laminate of the present invention preferably has a rate of decrease in thermal conductivity of 50% or greater, more preferably 55% or greater and preferably 95% or less, more preferably 90% or less after being heated at 800°C for one minute, the rate of decrease in thermal conductivity being represented by the following formula (2).

$$\text{(Rate of decrease in thermal conductivity)} = [\text{(Thermal conductivity before heating)} - \text{(Thermal conductivity after heating)}]/\text{(Thermal conductivity before heating)} \times 100 \quad (2)$$

The heating method may be one described later in Examples.

The laminate of the present invention preferably has a bending modulus of 10 GPa or greater, more preferably 15 GPa or greater and preferably 100 GPa or less, more preferably 50 GPa or less.

The bending modulus can be measured by the method described later in Example.

The laminate of the present invention preferably has a bending modulus of 8 MPa or more, more preferably 0.2 GPa or greater, still more preferably 0.3 GPa or greater, further preferably 0.5 GPa or greater and preferably 100 GPa or less, more preferably 50 GPa or less, still more preferably 10 GPa or less, further preferably 5 GPa or less after being heated for three seconds with flame caused by ignition of a lithium-ion battery.

The laminate of the present invention preferably has a rate of decrease in bending modulus of 99.7% or less, more preferably 98.5% or less, still more preferably 98% or less after being heated for three seconds with flame caused by ignition of a lithium-ion battery, the rate of decrease in bending modulus being represented by the following formula (3). The rate of change is typically 0% or greater, for example 50% or greater.

When the rate is within the range, a strength decrease due to heat can be sufficiently reduced.

$$\text{(Rate of decrease in bending modulus)} = [\text{(Bending modulus before heating)} - \text{(Bending modulus after heating)}]/\text{(Bending modulus before heating)} \times 100 \quad (3)$$

The heating method may be one described later in Examples.

The laminate of the present invention preferably has a thickness of 0.4 mm or greater, more preferably 0.7 mm or greater and preferably 20 mm or less, more preferably 14 mm or less.

The laminate of the present invention preferably has a thickness ratio of the laminate before and after being heated of 1% or greater, more preferably 2% or greater and preferably 80% or less, more preferably 60% or less, the thickness ratio being defined by the following formula (4).

When the ratio is within the range, the strength after combustion can be easily maintained.

$$\text{(Thickness ratio)} = [\text{(Thickness of laminate after being heated)}/\text{(Thickness of laminate before being heated)}] \times 100 \quad (4)$$

The laminate of the present invention may be produced by, for example, a method including preparing a composition containing components such as the resin and fiber constituting the base layer and a composition containing components such as the thermoplastic resin and sintering promoter constituting the sintering layer, and forming the compositions into the base layer and the sintering layer by a method such as thermal press molding. If necessary, the layers may be formed to have a structure in which a base layer (A), a sintering layer (B), and a base layer (C) are laminated in this order (base layer (A)/sintering layer (B)/base layer (C)).

Examples of the method for forming the base layer include hand lay-up molding, spray-up molding, resin transfer molding, bag molding, injection molding, extrusion molding, and stamping molding.

Examples of the method for forming the sintering layer include calender molding, extrusion molding, and injection molding.

The laminate of the present invention can sufficiently reduce a strength decrease due to heat and have excellent heat resistance. The laminate thus can be suitably used as a member for transportation machinery or a member for a battery device.

Examples of the transportation machinery include automobiles such as gasoline-powered vehicles, hybrid vehicles, electric vehicles, and fuel cell vehicles; motorcycles such as gasoline-powered motorcycles, hybrid motorcycles, and electric motorcycles; bicycles such as power assisted bicycles; railway vehicles; vessels; and aircraft.

Examples of the member of transportation machinery include mechanism members, interior members, exterior members, windowpanes, and light covers.

Examples of the mechanism members include cooling pipes, air bag covers, air ducts, and heater units.

Examples of the interior members include ceiling, instrument panels, console boxes, arm rests, seat belt buckles, switches, and door trims.

Examples of the exterior members include emblems, number plate housings, bumper cores, and under covers.

Examples of the battery systems include primary batteries such as nickel manganese batteries, lithium batteries, and zinc-air batteries; secondary batteries such as nickel hydrogen batteries, lithium-ion batteries, and lead storage batteries; solar cells such as silicon solar cells, dye-sensitized solar cells, and perovskite solar cells; and fuel cells such as solid polymer fuel cells, alkali fuel cells, phosphoric acid fuel cells, and solid oxide fuel cells.

Examples of the member of battery systems include battery covers, battery cooling water jackets, hydrogen tank covers, connectors, and insulation sheets.

The laminate of the present invention can be particularly suitably used as a cover for a lithium-ion battery. Moreover, the laminate can be suitably used as a cover for an in-vehicle battery because the laminate can reduce a strength decrease due to flame and heat generated by ignition inside a battery if the battery undergoes thermal runaway due to an external impact such as a collision accident.

- Advantageous Effects of Invention

The present invention can provide a laminate that can maintain sufficient strength even after combustion and that can reduce a strength decrease due to flame and heat caused by ignition inside a battery especially when the laminate is used as a cover for an in-vehicle battery.

BRIEF DESCRIPTION OF DRAWINGS

FIG. 1 is a perspective view of a mold for molding a battery cover.
FIG. 2 is a cross-sectional view illustrating molding of a battery cover.

DESCRIPTION OF EMBODIMENTS

The present invention is hereinafter described in more detail with reference to examples. The present invention should not be limited to these examples.

(Example 1)

(Preparation of base layer)

One hundred parts by mass of a resin and 10 parts by mass of a thermal stabilizer (produced by Nitto Kasei Co., Ltd., organotin thermal stabilizer "TVS#1380") were mixed with 400 parts by mass of tetrahydrofuran (THF, produced by FUJIFILM Wako Pure Chemical Corporation) to prepare a resin solution. The resin used was a chlorinated polyvinyl chloride resin (CPVC, produced by Tokuyama Sekisui Co., Ltd., average degree of polymerization: 500, chlorine content: 67.4% by mass, loss on heating at 400°C: 72% by mass, time required for loss on heating at 400°C to reach 50% by mass: one minute, oxygen index: 60).

Subsequently, GF-1 (sheet-form glass fiber, "MC450A" produced by Nitto Boseki Co., Ltd., average fiber size: 7 um, average fiber length: 50 mm, weight per unit area: 450 g/m$^2$) was impregnated with the resin solution by a hand lay-up method. This process was repeated seven times to stack seven glass fiber layers. Then, the THF was evaporated by drying with a drier, whereby a base layer was obtained. The obtained base layer had a thickness of 1.5 mm. The amount of the fiber relative to 100 parts by mass of the resin was 90 parts by mass. The amount of the resin in the base layer was 50% by mass.

The average fiber size of the fiber was determined by calculating the average of the fiber sizes of ten random points in an image captured using a scanning electron microscope (SEM). The average fiber length of the fiber was calculated from the average of 20 random samples measured using an SEM. The weight per unit area of the fiber was calculated by cutting the sheet-form fiber to a size of 10 cm × 10 cm and measuring the weight (g) per m$^2$.

The loss on heating at 400°C of the resin and the time were measured using a thermogravimetry device "TG/DTA 6200" produced by SII NanoTechnology Inc.

The oxygen index of the resin was measured by a method in conformity with ASTM D2863 (Procedure A, step size for oxygen concentration increase and decrease: 0.2%) using "Candle type flammability tester AC2" produced by Toyo Seiki Seisaku-Sho, Ltd.

The chlorinated polyvinyl chloride resin was subjected to measurement of the average degree of polymerization in conformity with JIS K 6720-2:1999 and measurement of the chlorine content in conformity with JIS K7229.

The chlorinated polyvinyl chloride resin was subjected to molecular structure analysis in conformity with the NMR measurement method described in R. A. Komoroski, R. G. Parker, J. P. Shocker, Macromolecules, 1985, 18, 1257-1265 to measure the amount of the structural units (b) and (c).

NMR measurement conditions were as follows.

Apparatus: FT-NMRJEOLJNM-AL-300
Measured nuclei: 13C (proton complete decoupling)
Pulse width: 90°
PD: 2.4 sec
Solvent: o-dichlorobenzene:deuterated benzene (C5D5) = 3:1
Sample concentration: about 20%
Temperature: 110°C
Reference material: central signal for benzene set to 128 ppm
Number of scans: 20,000

(Preparation of sintering layer)

One hundred parts by mass of the thermoplastic resin, 0.5 parts by mass of a sintering promoter (produced by FUJIFILM Wako Pure Chemical Corporation, zinc chloride (ZnCl$_2$), average particle size: 10 pm), 10 parts by mass of a thermal stabilizer (produced by Nitto Kasei Co., Ltd., organotin thermal stabilizer "TVS#1380"), and 2 parts by mass of a lubricant (produced by Clariant, "WAX-OP") were mixed and roll-kneaded to prepare a sintering layer (B) having a thickness of 0.5 mm. The thermoplastic resin used was a chlorinated polyvinyl chloride resin (CPVC, produced by Tokuyama Sekisui Co., Ltd., average degree of polymerization: 500, chlorine content: 67.4% by mass, loss on heating at 400°C: 72% by mass, time required for loss on heating at 400°C to reach 50% by mass: one minute, oxygen index: 60).

(Preparation of laminate)

The base layer and the sintering layer were laminated and pressed with a press machine, whereby a laminate having a thickness of 2.0 mm was obtained.

(Example 2)

A laminate having a thickness of 2.0 mm was obtained as in Example 1 except that in (Preparation of sintering layer), a polyvinyl chloride resin (PVC, produced by Tokuyama Sekisui Co., Ltd., average degree of polymerization: 1,000, loss on heating at 400°C: 59% by mass, time required for loss on heating at 400°C to reach 50% by mass: 3 minutes and 40 seconds, oxygen index: 48) was used instead of the chlorinated polyvinyl chloride resin.

(Examples 3 and 4)

A laminate having a thickness of 2.0 mm was obtained as in Example 1 except that in (Preparation of base layer), the formulation was changed so that the amounts of the resin and the fiber were as shown in Table 1.

(Example 5)

A laminate having a thickness of 2.0 mm was obtained as in Example 1 except that in (Preparation of base layer), a polyvinyl chloride resin having the composition shown in Table 1 was used.

(Example 6)

A laminate having a thickness of 2.0 mm was obtained as in Example 1 except that in (Preparation of base layer), a polycarbonate (loss on heating at 400°C: 32% by mass, time required for loss on heating at 400°C to reach 50% by mass: seven minutes, oxygen index: 25, weight average molecular weight: 25,000) was used instead of the chlorinated polyvinyl chloride resin.
The weight average molecular weight was a polystyrene-equivalent average molecular weight and measured by GPC using a column LF-804 (produced by Showa Denko K.K.).

(Example 7)

A laminate having a thickness of 2.0 mm was obtained as in Example 1 except that in (Preparation of base layer), a polyamide (loss on heating at 400°C: 21% by mass, time required for loss on heating at 400°C to reach 50% by mass: nine minutes, oxygen index: 24, weight average molecular weight: 30,000) was used instead of the chlorinated polyvinyl chloride resin.
The weight average molecular weight was a polymethyl methacrylate-equivalent average molecular weight and measured by GPC using a column LF-804 (produced by Showa Denko K.K.).

(Examples 8 and 9)

A laminate having a thickness of 2.0 mm was obtained as in Example 1 except that in (Preparation of base layer), a chlorinated polyvinyl chloride resin having the composition shown in Table 1 was used.

(Example 10)

A laminate having a thickness of 2.0 mm was obtained as in Example 1 except that in (Preparation of base layer), CF (sheet-form carbon fiber, "T-700" produced by Toray Industries Inc., average fiber size: 10 um, continuous fiber, weight per unit area: 220 $g/m^2$) was used as the fiber.

(Example 11)

A laminate having a thickness of 2.0 mm was obtained as in Example 1 except that in (Preparation of base layer), GF-2 (sheet-form glass fiber, "U528-450" produced by Owens Corning, average fiber size: 7 um, continuous fiber, weight per unit area: 450 $g/m^2$) was used as the fiber.

(Example 12)

A laminate having a thickness of 2.0 mm was obtained as in Example 1 except that in (Preparation of base layer), GF-3 (sheet-form glass fiber, "MC600A" produced by Nitto Boseki Co., Ltd., average fiber size: 7 um, average fiber length: 50 mm, weight per unit area: 600 $g/m^2$) was used as the fiber.

(Example 13)

A laminate having a thickness of 2.0 mm was obtained as in Example 1 except that in (Preparation of base layer), GF-4 (sheet-form glass fiber, "MC300A" produced by Nitto Boseki Co., Ltd., average fiber size: 7 um, average fiber length: 50 mm, weight per unit area: 300 $g/m^2$) was used as the fiber.

(Example 14)

A laminate having a thickness of 2.0 mm was obtained as in Example 1 except that in (Preparation of sintering layer), a chlorinated polyvinyl chloride resin having the composition shown in Table 2 was used.

(Examples 15 and 16)

A laminate having a thickness of 2.0 mm was obtained as in Example 1 except that in (Preparation of sintering layer), the formulation was changed such that the amounts of the thermoplastic resin and the sintering promoter were as shown in Table 2.

(Examples 17 to 19)

A laminate having a thickness of 2.0 mm was obtained as in Example 1 except that in (Preparation of sintering layer), any of the following sintering promoters was used.

Zinc bromide ($ZnBr_2$): produced by FUJIFILM Wako Pure Chemical Corporation, average particle size 10 um
Zinc oxide (ZnO): produced by FUJIFILM Wako Pure Chemical Corporation, average particle size 0.5 um
Mo-type sintering promoter: produced by Huber, Kemgard 911C (zinc molybdate), average particle size 25 um

(Comparative Example 1)

A laminate was obtained as in Example 1 except that no sintering layer was formed and a base layer having a thickness of 2.0 mm was formed.

(Comparative Example 2)

A laminate having a thickness of 2.0 mm was obtained as in Example 1 except that in (Preparation of sintering layer), no sintering promoter was added.

(Comparative Example 3)

(Preparation of base layer)

One hundred parts of a chlorinated polyvinyl chloride resin (CPVC, produced by Tokuyama Sekisui Co., Ltd., average degree of polymerization: 500, chlorine content: 67.4% by mass: loss on heating at 400°C: 72% by mass), 10 parts by mass of a thermal stabilizer (produced by Nitto Kasei Co., Ltd., "TVS#1380"), and 2 parts by mass of a lubricant ("WAX-OP" produced by Clariant) were mixed and roll-kneaded to prepare resin layers each having a thickness of 0.3 mm.
The obtained resin layers were stacked and press-molded, whereby a base layer having a thickness of 1.5 mm was obtained.
A laminate having a thickness of 2.0 mm was obtained as in Example 1 except that the obtained base layer was used.

(Evaluation)

The base layers and laminates obtained in the examples and the comparative examples were evaluated as follows. Table 1 and Table 2 show the results.

(1) Bending modulus

The base layers obtained in the examples and the comparative examples were subjected to bending modulus measurement using "TENSILON" produced by ORIENTEC in conformity with ASTM D-790 under the following conditions. Specimen shape: length 13 mm × width 15 mm × thickness 3 mm Temperature: 23°C
The laminates obtained in the examples and the comparative examples were also subjected to bending modulus measurement in the same manner.
Further, the laminates obtained in the examples and the comparative examples were heated for three seconds with flame caused by ignition of a lithium-ion battery, and then subjected to bending modulus measurement in the same manner. The rate of change in bending modulus was calculated by the following formula (3).

$$(\text{Rate of decrease in bending modulus}) = [(\text{Bending modulus before heating}) - (\text{Bending modulus after heating})]/(\text{Bending modulus before heating}) \times 100 \quad (3)$$

The heating with flame caused by ignition of a lithium-ion battery was performed as follows.

·Lithium-ion battery: type 18650 (tradename "KEEPPOWER", 3.7 V, 3,600 mAh, 13.32 Wh)
·Ignition method

The lithium-ion battery is fully charged with a charger. The lithium-ion battery is then wrapped with a flexible heater, and the temperature is raised to 200°C. The heating is continued to ignite the battery.

·Specimen heating method

With the battery and the specimen spaced 20 cm apart, the specimen is heated for three seconds from below along the thickness direction of the specimen. For the examples and Comparative Examples 2 and 3, the specimen is heated from the sintering layer side.

(2) Thickness ratio of laminate before and after being heated

The thickness ratio of the laminate before and after the heating was calculated by the following formula (4).
The thickness of the laminate was measured with an X-ray CT device.

$$(\text{Thickness ratio}) = [(\text{Thickness of laminate after being heated})/(\text{Thickness of laminate before being heated})] \times 100 \quad (4)$$

(3) Heat resistance

The laminates obtained in the examples and the comparative examples were subjected to measurement of heat distortion temperature at a load of 186 N/cm$^2$ in conformity with ASTM D-648.

(4) Thermal conductivity

The laminates obtained in the examples and the comparative examples were each cut into a measurement sample with a size of 100 mm $\times$ 100 mm. The obtained measurement sample was subjected to measurement of thermal conductivity in conformity with JIS R 2616.
Further, the obtained measurement sample was fixed to a jig such that the thickness direction of the sample corresponded to the perpendicular direction. With the sample and a burner spaced 20 mm apart, the sample was heated from below. The heating was continued for one minute at 800°C, and then the thermal conductivity was measured in the same manner. The rate of decrease in thermal conductivity was calculated by the following formula (2).

$$(\text{Rate of decrease in thermal conductivity}) = [(\text{Thermal conductivity before heating}) - (\text{Thermal conductivity after heating})]/(\text{Thermal conductivity before heating}) \times 100 \quad (2)$$

(5) Comprehensive evaluation

Based on (1) to (4) above, the evaluation was performed using the following criteria,

o (Good): The base layer had a bending modulus of 10 GPa or greater and the laminate had a bending modulus of 0.2 GPa or greater after being heated, a rate of change in bending modulus of 98.5% or less, a thickness ratio of 10% or greater, a heat distortion temperature of 110°C or higher, and a rate of decrease in thermal conductivity of 30% or greater.

× (Poor): Other than the above.

(6) Battery cover appearance

(Preparation of cover for lithium-ion battery)

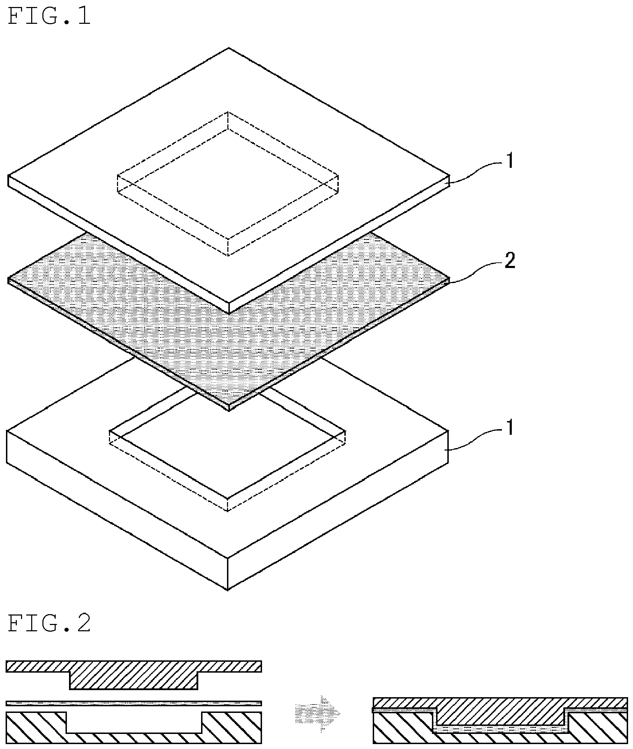

The laminates obtained in the examples were each press-molded using a mold shown in Fig. 1 in a manner shown in Fig. 2 (temperature: 200°C, preheating: four minutes, pressurizing: four minutes, cooling: four minutes), whereby a cover for a lithium-ion battery was prepared. The cover had good appearance without cracks or fractures.

[Table 1]

| | | | | | Example | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| Laminate | Base layer | Resin | CPVC | % by mass | 50 | 50 | 20 | 75 | - | - | - | 50 | 50 | 50 | 50 |
| | | | | Average degree of polymerization | 500 | 500 | 500 | 500 | - | - | - | 1000 | 1000 | 500 | 500 |
| | | | | Chlorine content (% by mass) | 67.4 | 67.4 | 67.4 | 67.4 | - | - | - | 67.2 | 72.0 | 67.4 | 67.4 |
| | | | | Structural unit (b) (mol%) | 26.5 | 26.5 | 26.5 | 26.5 | - | - | - | 26.8 | 52.1 | 26.5 | 26.5 |
| | | | | Structural unit (c) (mol%) | 38.1 | 38.1 | 38.1 | 38.1 | - | - | - | 36.4 | 40.9 | 38.1 | 38.1 |
| | | | PVC | % by mass | - | - | - | - | 50 | - | - | - | - | - | - |
| | | | | Average degree of polymerization | - | - | - | - | 600 | - | - | - | - | - | - |
| | | | Polycarbonate | % by mass | - | - | - | - | - | 50 | - | - | - | - | - |
| | | | Polyamide | % by mass | - | - | - | - | - | - | 50 | - | - | - | - |
| | | | Loss on heating (% by mass) | | 72 | 72 | 72 | 72 | 58 | 32 | 21 | 72 | 72 | 72 | 72 |
| | | | Time required for loss on heating to reach 50% by mass | | 1m | 1m | 1m | 1m | 3m 40s | 7m | 9m | 1m | 4m | 1m | 1m |
| | | | Oxygen index | | 60 | 60 | 60 | 60 | 48 | 25 | 24 | 60 | 65 | 60 | 60 |
| | | Fiber | Type | | GF-1 | GF-1 | GF-1 | GF-1 | GF-1 | GF-1 | GF-1 | GF-1 | GF-1 | CF | GF-2 |
| | | | % by mass | | 45 | 45 | 75 | 20 | 45 | 45 | 45 | 45 | 45 | 45 | 45 |
| | | Thickness (mm) | | | 1.5 | 1.5 | 1.5 | 1.5 | 1.5 | 1.5 | 1.5 | 1.5 | 1.5 | 1.5 | 1.5 |

EP 4 292 812 A1

16

(continued)

| | | | | | Example | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| Sintering layer | Thermoplastic resin | CPVC | % by mass | 88.9 | - | 88.9 | 88.9 | 88.9 | 88.9 | 88.9 | 88.9 | 88.9 | 88.9 | 88.9 |
| | | | Average degree of polymerization | 500 | - | 500 | 500 | 500 | 500 | 500 | 500 | 500 | 500 | 500 |
| | | | Chlorine content (% by mass) | 67.4 | - | 67.4 | 67.4 | 67.4 | 67.4 | 67.4 | 67.4 | 67.4 | 67.4 | 67.4 |
| | | | Structural unit (b) (mol%) | 26.5 | - | 26.5 | 26.5 | 26.5 | 26.5 | 26.5 | 26.5 | 26.5 | 26.5 | 26.5 |
| | | | Structural unit (c) (mol%) | 38.1 | - | 38.1 | 38.1 | 38.1 | 38.1 | 38.1 | 38.1 | 38.1 | 38.1 | 38.1 |
| | | PVC | % by mass | - | 88.9 | - | - | - | - | - | - | - | - | - |
| | | | Average degree of polymerization | - | 1000 | - | - | - | - | - | - | - | - | - |
| | | Loss on heating (% by mass) | | 72 | 59 | 72 | 72 | 72 | 72 | 72 | 72 | 72 | 72 | 72 |
| | | Time required for loss on heating to reach 50% by mass | | 1m | 3m 40s | 1m | 1m | 1m | 1m | 1m | 1m | 1m | 1m | 1m |
| | | Oxygen index | | 60 | 48 | 60 | 60 | 60 | 60 | 60 | 60 | 60 | 60 | 60 |
| | Sintering promoter | Type | | $ZnCl_2$ | $ZnCl_2$ | $ZnCl_2$ | $ZnCl_2$ | $ZnCl_2$ | $ZnCl_2$ | $ZnCl_2$ | $ZnCl_2$ | $ZnCl_2$ | $ZnCl_2$ | $ZnCl_2$ |
| | | % by mass | | 0.4 | 0.4 | 0.4 | 0.4 | 0.4 | 0.4 | 0.4 | 0.4 | 0.4 | 0.4 | 0.4 |
| | Thickness (mm) | | | 0.5 | 0.5 | 0.5 | 0.5 | 0.5 | 0.5 | 0.5 | 0.5 | 0.5 | 0.5 | 0.5 |
| Amount relative to entire laminate (% by mass) | Resin of base layer | | | 37.5 | 37.5 | 15.0 | 56.3 | 37.5 | 37.5 | 37.5 | 37.5 | 37.5 | 37.5 | 37.5 |
| | Thermoplastic resin in sintering layer | | | 22.2 | 22.2 | 22.2 | 22.2 | 22.2 | 22.2 | 22.2 | 22.2 | 22.2 | 22.2 | 22.2 |
| | Fiber | | | 33.8 | 33.8 | 56.3 | 150 | 33.8 | 33.8 | 33.8 | 33.8 | 33.8 | 33.8 | 33.8 |
| | Sintering promoter | | | 0.1 | 0.1 | 0.1 | 0.1 | 0.1 | 0.1 | 0.1 | 0.1 | 0.1 | 0.1 | 0.1 |

(continued)

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Evaluation | Bending modulus (GPa) | Base layer | 20 | 19 | 15 | 11 | 12 | 20 | 21 | 22 | 22 | 14 | 15 |
| | | Laminate — Before heating | 20 | 19 | 14 | 10 | 11 | 20 | 19 | 21 | 21 | 13 | 13 |
| | | Laminate — After heating | 2.0 | 0.50 | 0.50 | 0.50 | 0.90 | 0.45 | 0.50 | 0.80 | 1.50 | 0.80 | 0.40 |
| | | Rate of decrease (%) | 90.0 | 97.4 | 96.4 | 95.0 | 91.8 | 97.8 | 97.4 | 96.2 | 92.9 | 93.8 | 96.9 |
| | Thickness ratio of laminate before and after being heated (%) | | 35 | 19 | 28 | 11 | 10 | 24 | 21 | 25 | 30 | 25 | 19 |
| | Heat resistance | Heat distortion temperature (°C) | 120 | 118 | 119 | 116 | 110 | 121 | 123 | 121 | 125 | 119 | 120 |
| | Thermal conductivity (W/mK) | Laminate — Before heating | 0.26 | 0.27 | 0.26 | 0.24 | 0.27 | 0.23 | 0.3 | 0.26 | 0.26 | 0.28 | 0.28 |
| | | Laminate — After heating | 0.08 | 0.11 | 0.18 | 0.11 | 0.12 | 0.15 | 0.18 | 0.09 | 0.07 | 0.09 | 0.1 |
| | | Rate of decrease (%) | 69.2 | 59.3 | 30.8 | 54.2 | 55.6 | 34.8 | 40.0 | 65.4 | 73.1 | 67.9 | 64.3 |
| | Comprehensive evaluation | | ○ | ○ | ○ | ○ | ○ | ○ | ○ | ○ | ○ | ○ | ○ |

[Table 2]

| | | | | | | Example | | | | | | | | Comparative Example | | |
|---|---|---|---|---|---|---|---|---|---|---|---|---|---|---|---|---|
| | | | | | | 12 | 13 | 14 | 15 | 16 | 17 | 18 | 19 | 1 | 2 | 3 |
| Laminate | Base layer | Resin | CPVC | | % by mass | 50 | 50 | 50 | 50 | 50 | 50 | 50 | 50 | 50 | 50 | 89.3 |
| | | | | Average degree of polymerization | 500 | 500 | 500 | 500 | 500 | 500 | 500 | 500 | 500 | 500 | 500 |
| | | | | Chlorine content (% by mass) | 67.4 | 67.4 | 67.4 | 67.4 | 67.4 | 67.4 | 67.4 | 67.4 | 67.4 | 67.4 | 67.4 |
| | | | | Structural unit (b) (mol%) | 26.5 | 26.5 | 26.5 | 26.5 | 26.5 | 26.5 | 26.5 | 26.5 | 26.5 | 26.5 | 26.5 |
| | | | | Structural unit (c) (mol%) | 38.1 | 38.1 | 38.1 | 38.1 | 38.1 | 38.1 | 38.1 | 38.1 | 38.1 | 38.1 | 38.1 |
| | | | PVC | % by mass | - | - | - | - | - | - | - | - | - | - | - |
| | | | | Average degree of polymerization | | | | | | | | | | | |
| | | | Polycarbonate resin | % by mass | - | - | - | - | - | - | - | - | - | - | - |
| | | | Polyamide resin | % by mass | - | - | - | - | - | - | - | - | - | - | - |
| | | | Loss on heating (% by mass) | | 72 | 72 | 72 | 72 | 72 | 72 | 72 | 72 | 72 | 72 | 72 |
| | | | Time required for loss on heating to reach 50% by mass (min) | | 1m | 1m | 1m | 1m | 1m | 1m | 1m | 1m | 1m | 1m | 1m |
| | | | Oxygen index | | 60 | 60 | 60 | 60 | 60 | 60 | 60 | 60 | 60 | 60 | 60 |
| | | Fiber | Type | | GF-3 | GF-4 | GF-1 | GF-1 | GF-1 | GF-1 | GF-1 | GF-1 | GF-1 | GF-1 | - |
| | | | % by mass | | 45 | 45 | 45 | 45 | 45 | 45 | 45 | 45 | 45 | 45 | - |
| | | Thickness (mm) | | | 1.5 | 1.5 | 1.5 | 1.5 | 1.5 | 1.5 | 1.5 | 1.5 | 2 | 1.5 | 1.5 |

(continued)

| | | | | Example | | | | | | | | Comparative Example | | |
|---|---|---|---|---|---|---|---|---|---|---|---|---|---|---|
| | | | | 12 | 13 | 14 | 15 | 16 | 17 | 18 | 19 | 1 | 2 | 3 |
| Sintering layer | Thermoplastic resin | CPVC | % by mass | 88.9 | 88.9 | 88.9 | 88.4 | 80.3 | 88.9 | 88.9 | 88.9 | - | 89.2 | 88.9 |
| | | | Average degree of polymerization | 500 | 500 | 1000 | 500 | 500 | 500 | 500 | 500 | - | 500 | 500 |
| | | | Chlorine content (% by mass) | 67.4 | 67.4 | 72.0 | 67.4 | 67.4 | 67.4 | 67.4 | 67.4 | - | 67.4 | 67.4 |
| | | | Structural unit (b) (mol%) | 26.5 | 26.5 | 52.1 | 26.5 | 26.5 | 26.5 | 26.5 | 26.5 | - | 26.5 | 26.5 |
| | | | Structural unit (c) (mol%) | 38.1 | 38.1 | 40.9 | 38.1 | 38.1 | 38.1 | 38.1 | 38.1 | - | 38.1 | 38.1 |
| | | PVC | % by mass | - | - | - | - | - | - | - | - | - | - | - |
| | | | Average degree of polymerization | | | | | | | | | | | |
| | Loss on heating (% by mass) | | | 72 | 72 | 78 | 72 | 72 | 72 | 72 | 72 | - | 72 | 72 |
| | Time required for loss on heating to reach 50% by mass (min) | | | 1m | 1m | 1m | 1m | 1m | 1m | 1m | 1m | - | 1m | 1m |
| | Oxygen index | | | 60 | 60 | 65 | 60 | 60 | 60 | 60 | 60 | - | 60 | 60 |
| | Sintering promoter | | Type | $ZnCl_2$ | $ZnCl_2$ | $ZnCl_2$ | $ZnCl_2$ | $ZnCl_2$ | $ZnBr_2$ | ZnO | Mo-type | - | - | ZnCl2 |
| | | | % by mass | 0.4 | 0.4 | 0.4 | 1 | 10 | 0.4 | 0.4 | 0.4 | - | - | 0.4 |
| | Thickness (mm) | | | 0.5 | 0.5 | 0.5 | 0.5 | 0.5 | 0.5 | 0.5 | 0.5 | - | 0.5 | 0.5 |
| Amount relative to entire laminate (% by mass) | Resin of base layer | | | 37.5 | 37.5 | 37.5 | 37.5 | 37.5 | 37.5 | 37.5 | 37.5 | 50 | 37.5 | 67.0 |
| | Thermoplastic resin in sintering layer | | | 22.2 | 22.2 | 22.2 | 22.1 | 20.1 | 22.2 | 22.2 | 22.2 | - | 22.3 | 22.2 |
| | Fiber | | | 33.8 | 33.8 | 33.8 | 33.8 | 33.8 | 33.8 | 33.8 | 33.8 | 45 | 33.75 | - |
| | Sintering promoter | | | 0.1 | 0.1 | 0.1 | 0.3 | 2.5 | 0.1 | 0.1 | 0.1 | - | - | 0.1 |

(continued)

| | | | | Example | | | | | | | | Comparative Example | | |
|---|---|---|---|---|---|---|---|---|---|---|---|---|---|---|---|
| | | | | 12 | 13 | 14 | 15 | 16 | 17 | 18 | 19 | 1 | 2 | 3 |
| Evaluation | Bending modulus (GPa) | | Base layer | 18 | 13 | 20 | 20 | 20 | 19 | 18 | 19 | 20 | 20 | 0.2 |
| | | Laminate | Before heating | 17 | 12 | 20 | 18 | 18 | 17 | 17 | 17 | 20 | 20 | * |
| | | | After heating | 1.1 | 0.60 | 1.10 | 1.50 | 1.90 | 1.20 | 1.10 | 1.40 | 0.04 or less | 0.04 or less | * |
| | | | Rate of decrease (%) | 93.5 | 95.0 | 94.5 | 91.7 | 89.4 | 92.9 | 93.5 | 91.8 | 99 or greater | 99 or greater | 99 or greater |
| | Thickness ratio of laminate before and after being heated (%) | | | 25 | 19 | 25 | 35 | 39 | 18 | 20 | 19 | 1 or less | 1 or less | Perforated |
| | Heat resistance | Heat distortion temperature (°C) | | 119 | 120 | 118 | 119 | 118 | 119 | 118 | 118 | 120 | 120 | 112 |
| | Thermal conductivity (W/mK) | Laminate | Before heating | 0.27 | 0.28 | 0.28 | 0.28 | 0.26 | 0.27 | 0.28 | 0.28 | 0.27 | 0.27 | * |
| | | | After heating | 0.18 | 0.15 | 0.11 | 0.1 | 0.07 | 0.09 | 0.13 | 0.11 | 0.26 | Not measurable | * |
| | | | Rate of decrease (%) | 33.3 | 46.4 | 60.7 | 64.3 | 73.1 | 66.7 | 53.6 | 60.7 | 3.7 | - | * |
| | Comprehensive evaluation | | | ○ | ○ | ○ | ○ | ○ | ○ | ○ | ○ | × | × | × |
| * Not measurable due to loss of the resin | | | | | | | | | | | | | | |

INDUSTRIAL APPLICABILITY

The present invention can provide a laminate that can maintain sufficient strength even after combustion and that can reduce a strength decrease due to flame and heat caused by ignition inside a battery especially when the laminate is used as a cover for an in-vehicle battery.

REFERENCE SIGNS LIST

1    mold
2    laminate

**Claims**

**1.** A laminate comprising:

a base layer containing a resin and a fiber; and
a sintering layer containing a thermoplastic resin and a sintering promoter.

**2.** The laminate according to claim 1, having a rate of change in bending modulus of 99.7% or less after being heated for three seconds with flame caused by ignition of a lithium-ion battery, the rate of change in bending modulus being represented by the following formula (3) :

```
(Rate of decrease in bending modulus) = [(Bending modulus
before heating) - (Bending modulus after heating)]/(Bending
modulus before heating) × 100   (3).
```

**3.** The laminate according to claim 1 or 2,
wherein the base layer has a bending modulus of 10 GPa or greater.

**4.** The laminate according to any one of claims 1 to 3,
wherein the fiber is at least one selected from the group consisting of a glass fiber and a carbon fiber.

**5.** The laminate according to any one of claims 1 to 4,
wherein the resin has a loss on heating at 400°C of 30 to 80% by mass.

**6.** The laminate according to any one of claims 1 to 5,
wherein the sintering promoter constituting the sintering layer is a Lewis acid catalyst.

FIG.1

FIG.2

## INTERNATIONAL SEARCH REPORT

| International application No. |
|---|
| **PCT/JP2022/014460** |

**A. CLASSIFICATION OF SUBJECT MATTER**

**B32B 27/12**(2006.01)i; **B32B 7/027**(2019.01)i; **B32B 27/18**(2006.01)i; *H01M 10/625*(2014.01)n; *H01M 10/658*(2014.01)n; *H01M 50/204*(2021.01)n; *H01M 50/229*(2021.01)n; *H01M 50/231*(2021.01)n; *H01M 50/249*(2021.01)n
FI: B32B27/12; B32B7/027; B32B27/18 Z; H01M50/204 401H; H01M50/229; H01M50/231; H01M50/249; H01M10/625; H01M10/658

According to International Patent Classification (IPC) or to both national classification and IPC

**B. FIELDS SEARCHED**

Minimum documentation searched (classification system followed by classification symbols)

B32B1/00-43/00; H01M10/52-10/667; H01M50/20-50/298

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-191274 A (MITSUBISHI PAPER MILLS LTD) 26 November 2020 (2020-11-26) claims, paragraphs [0017], [0031], [0034], [0038], examples | 1-6 |
| A | WO 2019/163839 A1 (SEKISUI CHEMICAL CO LTD) 29 August 2019 (2019-08-29) entire text, all drawings | 1-6 |
| A | JP 2013-510742 A (UNIFRAX I LLC) 28 March 2013 (2013-03-28) entire text, all drawings | 1-6 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

| | International application No. |
|---|---|
| | **PCT/JP2022/014460** |

| Patent document cited in search report | | | Publication date (day/month/year) | Patent family member(s) | | | Publication date (day/month/year) |
|---|---|---|---|---|---|---|---|
| JP | 2020-191274 | A | 26 November 2020 | (Family: none) | | | |
| WO | 2019/163839 | A1 | 29 August 2019 | US | 2021/0013460 | A1 | |
| | | | | claims, examples, figures | | | |
| | | | | EP | 3756884 | A1 | |
| | | | | CN | 111727120 | A | |
| | | | | TW | 201938775 | A | |
| JP | 2013-510742 | A | 28 March 2013 | US | 2011/0126957 | A1 | |
| | | | | claims, examples, figures | | | |
| | | | | EP | 2499214 | A1 | |
| | | | | CN | 102741377 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001294048 A
- JP 2013097883 A
- WO 2019044801 A
- JP 3990531 B

**Non-patent literature cited in the description**

- **R. A. KOMOROSKI ; R. G. PARKER.** *Macromolecules,* 1985, vol. 18, 1257-1265
- **R. A. KOMOROSKI ; R. G. PARKER ; J. P. SHOCKER.** *Macromolecules,* 1985, vol. 18, 1257-1265